# EUROPEAN PATENT APPLICATION

(11) **EP 2 998 704 A1**
(43) Date of publication of application: **23.03.2016**
(21) Application number: 14823602.9
(22) Date of filing: 16.06.2014
(51) Int. Cl.: G01C 21/34, G08G 1/137, G09B 29/10

(54) **DRIVING SUPPORT SYSTEM, METHOD, AND PROGRAM**

(30) Priority: 12.07.2013 JP 2013146823
(71) Applicant: Aisin AW Co., Ltd., Anjo-shi, Aichi 444-1192 (JP)
(72) Inventor: TAKEUCHI, Masashi, Sapporo-shi, Hokkaido 004-0015 (JP)
(74) Representative: Intès, Didier Gérard André
(86) International application number: PCT/JP2014/065841
(87) International publication number: WO 2015/005062

(57) **Abstract**

[TASK] To provide a technology that can suppress the possibility that a driver unintentionally reaches an attention location that requires a determination as to whether or not to travel.

[MEANS FOR SOLVING THE PROBLEM] A scheduled travel route for guiding a vehicle to a destination location is acquired to provide guidance on the scheduled travel route. An along-the-way route to be followed in the case where the vehicle travels along the way is acquired. An attention location that requires a determination as to whether or not to travel is acquired. An intersection which is positioned between the attention location that is present on the along-the-way route and the vehicle and to which a road that can be traveled on without reaching the attention location other than the attention location that is present on the along-the-way route is connected is specified as a guide target intersection. Guidance on the guide target intersection is provided in the case where guidance on the scheduled travel route is not provided.

## Description

### TECHNICAL FIELD

The present invention relates to a drive assist system, method, and program.

### BACKGROUND ART

There has hitherto been known a technology in which a warning is issued in the case where there is a road with a hindrance to the passage of a vehicle straight ahead of the vehicle in order to prevent entry into the road with a hindrance to the passage of the vehicle (e.g. Patent Document 1).

### [Related-art Documents]

### [Patent Documents]

[Patent Document 1] Japanese Patent Application Publication No. H10-260054 (JP H10-260054 A)

### SUMMARY OF THE INVENTION

### [Problem to be Solved by the Invention]

A hindrance to the passage located around the vehicle may be present at a location other than ahead of the vehicle. Thus, even if a warning is issued in the case where a road with a hindrance to the passage is present straight ahead of the vehicle by the technique according to the related art discussed above and the vehicle travels in a non-straight direction at an intersection in accordance with the warning, there may be a hindrance located in the non-straight direction. In this case, the road with a hindrance to the passage cannot be avoided.

The present invention has been made in view of the foregoing issue, and therefore has an object to provide a technology that can reduce the possibility that a driver unintentionally reaches an attention location that requires a determination as to whether or not to travel.

### [Means for Solving the Problem]

In order to achieve the foregoing object, along-the-way route acquisition means for acquiring an along-the-way route to be followed in the case where the vehicle travels along the way; attention location acquisition means for acquiring an attention location that requires a determination as to whether or not to travel; guide target intersection specifying means for specifying, as a guide target intersection, an intersection which is positioned between the attention location that is present on the along-the-way route and the vehicle and to which a road that can be traveled on without reaching the attention location other than the attention location that is present on the along-the-way route is connected; and intersection guide means for providing guidance on the guide target intersection.

In order to achieve the foregoing object, in addition, a drive assist method includes: an along-the-way route acquisition step of acquiring an along-the-way route to be followed in the case where the vehicle travels along the way; an attention location acquisition step of acquiring an attention location that requires a determination as to whether or not to travel; a guide target intersection specifying step of specifying, as a guide target intersection, an intersection which is positioned between the attention location that is present on the along-the-way route and the vehicle and to which a road that can be traveled on without reaching the attention location other than the attention location that is present on the along-the-way route is connected; and an intersection guide step of providing guidance on the guide target intersection.

In order to achieve the foregoing object, further, a drive assist program that causes a computer to implement: an along-the-way route acquisition function of acquiring an along-the-way route to be followed in the case where the vehicle travels along the way; an attention location acquisition function of acquiring an attention location that requires a determination as to whether or not to travel; a guide target intersection specifying function of specifying, as a guide target intersection, an intersection which is positioned between the attention location that is present on the along-the-way route and the vehicle and to which a road that can be traveled on without reaching the attention location other than the attention location that is present on the along-the-way route is connected; and an intersection guide function of providing guidance on the guide target intersection.

That is, the vehicle can travel without reaching an attention location through at least one road connected to the guide target intersection. Thus, the driver of the vehicle can easily travel while avoiding an attention location with guidance on the guide target intersection provided, which reduces the possibility that the driver of the vehicle unintentionally reaches an attention location.

### BRIEF DESCRIPTION OF THE DRAWINGS

[FIG. 1] FIG. 1 is a block diagram illustrating a navigation system that includes a drive assist system.
[FIG. 2] FIG. 2 is a flowchart illustrating a guide target intersection acquisition process.
[FIG. 3] FIG. 3 is a flowchart illustrating an intersection guide process.
[FIG. 4] FIGS. 4A, 4B, and 4C each illustrate an actual example of roads ahead of a vehicle.

### MODES FOR CARRYING OUT THE INVENTION

An embodiment of the present invention will be described below in the following order:
(1) Configuration of Navigation Terminal
(2) Guide Target Intersection Acquisition Process
(3) Intersection Guide Process
(4) Other Embodiments

### (1) Configuration of Navigation Terminal

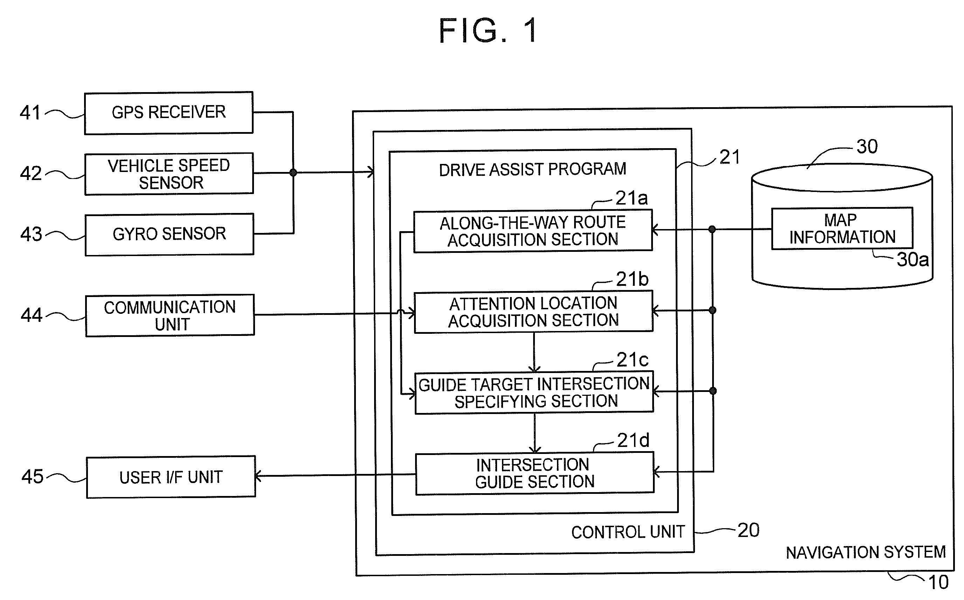

FIG. 1 is a block diagram illustrating the configuration of a drive assist system mounted on a vehicle. In the embodiment, the drive assist system is implemented by a navigation system 10. The navigation system 10 includes a control unit 20 including a CPU, a RAM, a ROM, and so forth. The control unit 20 can execute programs stored in the ROM. In the embodiment, a navigation program can be executed as one of the programs. The navigation program is a program that causes the control unit 20 to implement a function of displaying a map including the current position of the vehicle on a display section of a navigation terminal to guide a driver to a destination location.

That is, the control unit 20 can set a destination location, search for a scheduled travel route from a departure location to the destination location, and guide the vehicle along the scheduled travel route through the navigation program. Further, the navigation program includes various types of programs utilized during travel. In the embodiment, the navigation program includes a drive assist program 21 that causes the control unit 20 to provide guidance for determining whether or not to avoid an attention location that requires a determination as to whether or not to travel.

A storage medium 30 stores map information 30a. The map information 30a includes node data indicating the position etc. of nodes corresponding to end points of road sections in which the vehicle travels, shape interpolation point data indicating the position etc. of shape interpolation points for specifying the shape of the road sections between the nodes, link data indicating coupling between the nodes, and so forth. The nodes that are the end points of the road sections correspond to intersections. In the embodiment, in addition, the link data are correlated with the attribute (the system of the toll to be paid in order to travel on the road, a general road, etc.) of each road section indicated by each link data, the travelable direction, and information indicating that the road is on an along-the-way route. The along-the-way route is a route to be followed in the case where the vehicle travels along the road on which the vehicle is present, and information indicating that the road is an along-the-way route may be defined such that continuous road sections that match the definition of "along-the-way" prescribed in advance can be acquired as the along-the-way route. Thus, in the embodiment, continuous road sections that are most similar to straight lines are defined in advance as the along-the-way route, and an identical symbol is correlated with the continuous along-the-way route sections to define information indicating that the road is an along-the-way route.

The vehicle according to the embodiment includes a GPS receiver 41, a vehicle speed sensor 42, a gyro sensor 43, a communication unit 44, and a user I/F unit 45. The GPS receiver 41 receives radio waves from GPS satellites to output a signal indicating a signal for calculating the current location of the vehicle via an interface (not illustrated). The control unit 20 acquires the signal to acquire the current location of the vehicle. The vehicle speed sensor 42 outputs a signal corresponding to the rotational speed of wheels of the vehicle. The control unit 20 acquires the signal via an interface (not illustrated) to acquire the vehicle speed. The gyro sensor 43 detects the angular acceleration of gyration of the vehicle in a horizontal plane to output a signal corresponding to the direction of the vehicle. The control unit 20 acquires the signal to acquire the travel direction of the vehicle. The vehicle speed sensor 42, the gyro sensor 43, and so forth are utilized to specify the travel track of the vehicle. In the embodiment, the current location is specified on the basis of the departure location and the travel track of the vehicle, and the current location of the vehicle specified on the basis of the departure location and the travel track is corrected on the basis of the output signal from the GPS receiver 41.

The communication unit 44 is constituted of a circuit for wireless communication. The control unit 20 can control the communication unit 44 to communicate with a traffic information management device (not illustrated). The traffic information management device generates traffic information indicating the presence or absence of a traffic jam and a regulation on roads, and transmits the traffic information in response to a request from the communication unit 44. The control unit 20 regularly acquires the traffic information regarding road sections included in a mesh in which the current location of the vehicle is present, and stores the traffic information in the RAM. Thus, in the case where the traffic information is stored in the RAM, the control unit 20 can reference the traffic information to specify the start location and the end location of a traffic jam and a location at which a regulation is enforced (in the case of a regulation section, the start location and the end location of a regulation) on roads.

The user I/F unit 45 is an interface section that receives input of a command from the driver and that provides various kinds of information to the driver, and includes a display section constituted of a touch panel display (not illustrated), an input section such as a switch, and a voice output section such as a speaker. The user I/F unit 45 receives a control signal from the control unit 20, and displays an image for providing the route guidance discussed above and various types of guidance on a guide target intersection or the like on the touch panel display.

The drive assist program 21 according to the embodiment is a program that causes the control unit 20 to execute a process for providing guidance on the guide target intersection in order to determine whether or not to avoid an attention location that requires a determination as to whether or not to travel. In the embodiment, guidance on the guide target intersection is provided in the case where guidance on the scheduled travel route is not provided. That is, in the embodiment, in the case where a location that requires a determination as to whether or not to travel, e.g. a location that the driver should determine in advance whether or not to travel through, a location with a factor etc. that hinders travel, or the like, is present on the along-the-way route, such a location is considered as an attention location. Specifically, in the case where any of the start location of a traffic jam, the start location of a passage regulation, and a toll system changeover location is present, such a location is considered as an attention location. In the embodiment, in addition, the vehicle can be guided along the scheduled travel route. An attention location is set to have an increased cost in searching for a scheduled route, and the scheduled travel route is determined on the basis of the cost. Thus, the scheduled travel route is prescribed so as to avoid an attention location as much as possible. In the case where guidance on the scheduled travel route is provided, it is less necessary to provide guidance for avoiding an attention location. In the case where guidance on the scheduled travel route is not provided, however, a route that avoids an attention location that is present on the along-the-way route is not specified. Thus, in the embodiment, guidance on the guide target intersection is provided in the case where guidance on the scheduled travel route is not provided. As a result, it is possible to provide guidance for avoiding an attention location.

In the embodiment, in order to cause the control unit 20 to execute a process for providing guidance on the guide target intersection, the drive assist program 21 includes an along-the-way route acquisition section 21a, an attention location acquisition section 21b, a guide target intersection specifying section 21c, and an intersection guide section 21e. The along-the-way route acquisition section 21a is a program module that causes the control unit 20 to implement a function of acquiring an along-the-way route to be followed in the case where the vehicle travels along the way. That is, through processing performed by the along-the-way route acquisition section 21a, the control unit 20 acquires the current location of the vehicle on the basis of output signals from the GPS receiver 41, the vehicle speed sensor 42, and the gyro sensor 43, and references the map information 30a to acquire a road section in which the current location is present. Then, the control unit 20 references information indicating an along-the-way route correlated with the link data for the road section in which the current location is present, and acquires an along-the-way route that is continuous ahead of the vehicle from the road section.

The attention location acquisition section 21b is a program module that causes the control unit 20 to implement a function of acquiring an attention location that requires a determination as to whether or not to travel. In the embodiment, through processing performed by the attention location acquisition section 21b, the control unit 20 communicates with the traffic information management via the communication unit 44, and in the case where traffic information regarding road sections composing the along-the-way route is present, acquires the traffic information. In the case where the traffic information indicates that the start location of a traffic jam or the start location of a passage regulation is present on the along-the-way route, the control unit 20 specifies the position of the location, and acquires the position as an attention location. Further, the control unit 20 references the link data for the road sections composing the along-the-way route, and in the case where a toll system changeover location is present on the along-the-way route, the control unit 20 specifies the position of the location, and acquires the position as an attention location. In the case where a plurality of locations that may be an attention location are present on the along-the-way route, the control unit 20 acquires the location that is the closest to the vehicle as an attention location.

The guide target intersection specifying section 21c is a program module that causes the control unit 20 to implement a function of specifying, as the guide target intersection, an intersection which is positioned between an attention location that is present on the along-the-way route and the vehicle and to which a road that can be traveled on without reaching an attention location other than the attention location that is present on the along-the-way route is connected. In determining whether or not a road can be traveled on without reaching an attention location other than the attention location that is present on the along-the-way route, the control unit 20 may determine whether or not an attention location is inevitably reached by traveling on the road, and may determine whether or not an attention location is reached before traveling in a predetermined range from an intersection on a road other than the along-the-way route. That is, it is only necessary that the possibility that the driver of the vehicle reaches an attention location should be suppressed by acquiring the guide target intersection and providing guidance on the guide target intersection in accordance with the determination and the driver performing an operation for avoiding an attention location in accordance with the guidance.

In the embodiment, if an attention location is not reached before traveling in a predetermined range from an intersection on a road other than the along-the-way route, the control unit 20 considers that the vehicle can travel on the road without reaching an attention location other than the attention location that is present on the along-the-way route. Specifically, through processing performed by the guide target intersection specifying section 21c, the control unit 20 acquires intersections positioned between the attention location that is present on the along-the-way route and the vehicle as candidates in the case where roads that allow the vehicle to exit other than the along-the-way route are connected to the intersection, no attention location is present within a predetermined range from the intersection on at least one of the roads that allow the vehicle to exit, and the intersection is at a predetermined distance or more from a traffic jam as the attention location that is present on the along-the-way route, and specifies the intersection that is the closest to the attention location, among the candidates, as the guide target intersection.

That is, in order to avoid an attention location, the vehicle should travel on a road other than the along-the-way route before reaching the attention location that is present on the along-the-way route. Thus, it is possible to check whether or not a road that allows avoidance of an attention location is connected to the intersection by determining whether or not an intersection to which a road that allows the vehicle to exit other than the along-the-way route are connected is present between the attention location that is present on the along-the-way route and the vehicle.

In addition, in order to avoid an attention location by exiting through a road that allows the vehicle to exit, it is necessary that an attention location should not be reached if the road that allows the vehicle to exit is traveled on. Thus, it is possible to determine whether or not an attention location is not reached from the intersection if the road that allows the vehicle to exit is traveled on by determining whether or not an attention location is present within a predetermined range from the intersection on at least one road that allows the vehicle to exit. In the embodiment, the predetermined range is the range of one road section.

Further, the range of a traffic jam is varied temporally, and therefore the range of a traffic jam may be increased when a long time elapses after a guide target intersection is specified, and the intersection specified as the guide target intersection may be included in the range of the traffic jam. Thus, a predetermined distance is defined as a distance over which the start location of a traffic jam as the attention location that is present on the along-the-way route may be moved within a period before the vehicle reaches the guide target intersection, it is determined whether or not the distance of the intersection from the traffic jam is equal to or more than the predetermined distance, and the intersection is not determined as a candidate in the case where the distance is less than the predetermined distance. Consequently, the guide target intersection can be specified such that the intersection specified as the guide target intersection is not included in the range of a traffic jam when the vehicle reaches the intersection with the range of the traffic jam increased after the guide target intersection is specified.

The control unit 20 references the map information 30a to specify intersections that meet all the foregoing determination conditions as candidates for the guide target intersection, for each intersection that is present between the attention location that is present on the along-the-way route and the vehicle. Further, if there is only one candidate for the guide target intersection, the control unit 20 specifies the candidate as the guide target intersection. In the case where there are a plurality of candidates for the guide target intersection, on the other hand, a desired intersection can be determined as the guide target intersection. In the embodiment, however, the control unit 20 specifies the intersection that is the closest to the attention location that is present on the along-the-way route as the guide target intersection. According to the configuration, guidance on an intersection for avoiding the attention location that is present on the along-the-way route and that is as close as possible to the attention location as the guide target intersection can be provided. Thus, guidance on an intersection for avoiding the attention location at a location that is as close as possible to the destination location assumed by the driver of the vehicle as the guide target intersection can be provided. Therefore, in the case where the vehicle travels on a road exclusively for automobiles, for example, and the road exclusively for automobiles is the along-the-way route, an attention location is present ahead of the vehicle, and an interchange located before the attention location is the guide target intersection, guidance on the interchange which enables avoidance of the attention location at a location that is as close as possible to the destination location utilizing the road exclusively for automobiles can be provided.

The intersection guide section 21e is a program module that causes the control unit 20 to implement a function of providing guidance on the guide target intersection. In the embodiment, guidance on the guide target intersection is provided through an image and a voice. The control unit 20 acquires the content of guidance and the guidance start location for each guide target intersection during travel of the vehicle, and outputs a control signal for outputting an image and a voice indicating the content of guidance on the guide target intersection to the user I/F unit 45 when the vehicle reaches the guidance start location for the guide target intersection. As a result, the user I/F unit 45 displays an image indicating the guide target intersection on the display section, and outputs a voice indicating the guide target intersection from the speaker.

The guide target intersection is prescribed such that an attention location can be avoided, that is, such that the vehicle can travel without reaching an attention location through at least one road connected to the guide target intersection. Thus, the driver of the vehicle can easily travel while avoiding an attention location with guidance on the guide target intersection provided, which suppresses the possibility that the driver of the vehicle unintentionally reaches an attention location.

### (2) Guide Target Intersection Acquisition Process

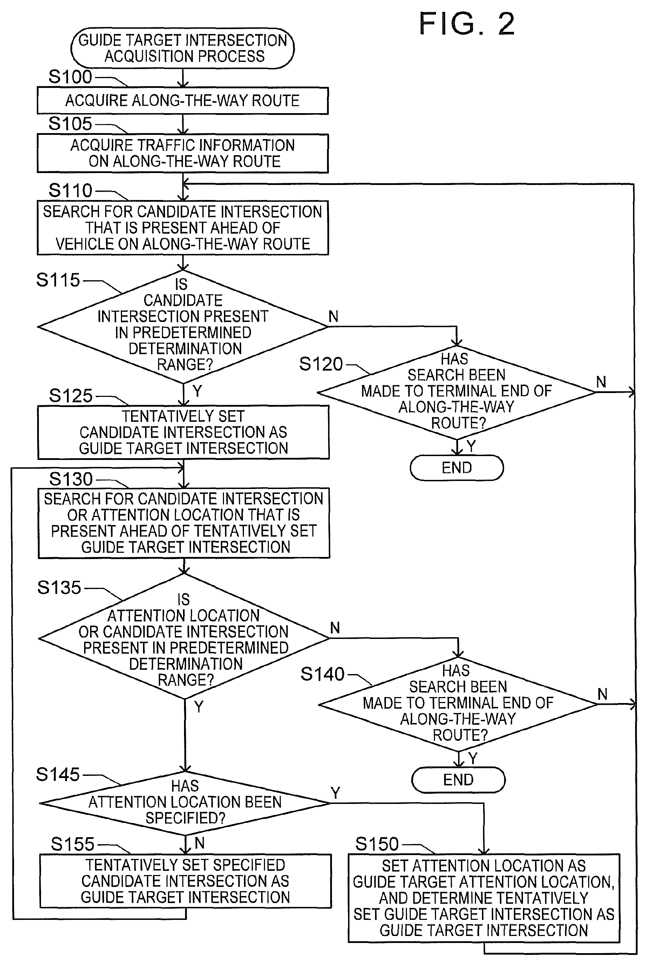

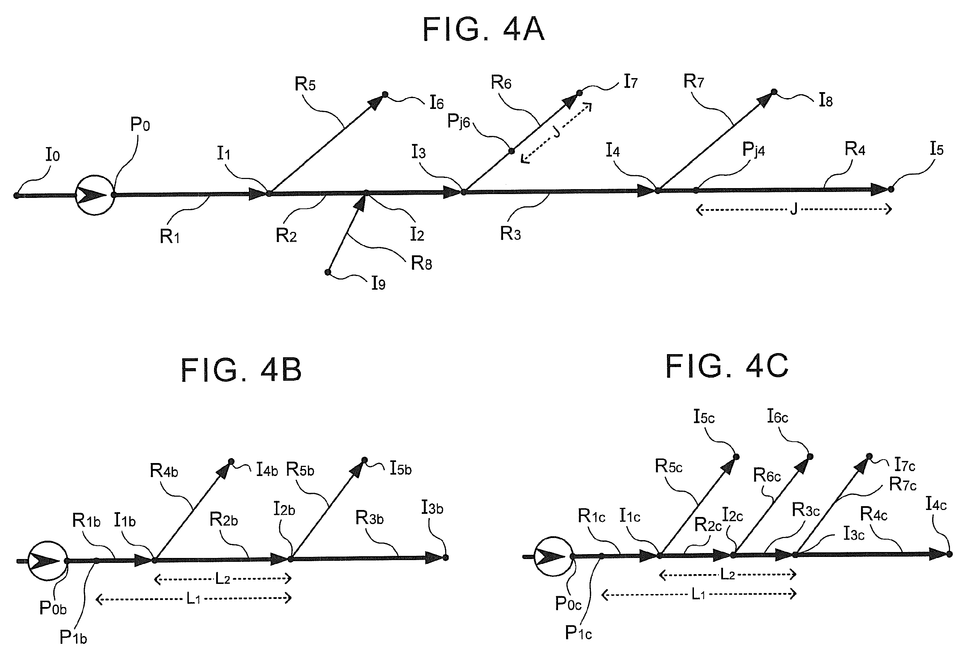

Next, a guide target intersection acquisition process will be described in detail. FIG. 2 is a flowchart of the guide target intersection acquisition process. The guide target intersection acquisition process will be described in accordance with the actual example illustrated in FIG. 4A. In FIG. 4A, solid arrows indicate road sections, and indicate that the vehicle can travel in the direction of the arrow. In addition, end points (I₀ to I₉) of the arrows indicate intersections, and a current location P₀ of the vehicle is in a road section R₁ between the intersections I₀ and I₁. In the example, further, it is assumed that the along-the-way route ahead of the current location of the vehicle is composed of road sections R₁, R₂, R₃, and R₄ indicated by thick solid lines and that a traffic jam J indicated by a broken arrow is present in the road section R₄.

The guide target intersection acquisition process is executed in the case where guidance on the scheduled travel route is not provided in the control unit 20. In the guide target intersection acquisition process, through processing performed by the along-the-way route acquisition section 21a, the control unit 20 first acquires an along-the-way route (step S100). That is, through processing performed by the along-the-way route acquisition section 21a, the control unit 20 specifies the current location of the vehicle and the road on which the vehicle is traveling on the basis of output signals from the GPS receiver 41, the vehicle speed sensor 42, and the gyro sensor 43 and the map information 30a, and references the map information 30a to specify the along-the-way route ahead of the current location. In the example illustrated in FIG. 4A, the road sections R₁, R₂, R₃, and R₄ are acquired as the along-the-way route.

Next, through processing performed by the attention location acquisition section 21b, the control unit 20 acquires traffic information on the along-the-way route (step S105). In the embodiment, the control unit 20 regularly communicates with the traffic information management device via the communication unit 44, acquires traffic information regarding road sections included in a mesh in which the current location of the vehicle is present, and stores the traffic information in the RAM. Thus, the control unit 20 references the RAM, and determines whether or not traffic information regarding the road sections R₁, R₂, R₃, and R₄ is stored. In the case where traffic information regarding the road sections R₁, R₂, R₃, and R₄ is accumulated in the RAM, the control unit 20 acquires the traffic information regarding the road sections R₁, R₂, R₃, and R₄. In FIG. 4A, the traffic jam J is present in the road section R₄, and therefore the control unit 20 acquires a start location Pⱼ₄ and an end location I₅ of the traffic jam J as the traffic information.

Next, through processing performed by the attention location acquisition section 21b and the guide target intersection specifying section 21c, the control unit 20 searches for a candidate intersection that is present ahead of the vehicle on the along-the-way route (step S110), and determines whether or not a candidate intersection is present in a predetermined determination range (e.g. 15 km) from the current location of the vehicle (step S 115). That is, the control unit 20 references the map information 30a, executes a process for specifying whether or not the intersections on the along-the-way route within the predetermined determination range ahead of the current location of the vehicle are candidate intersections sequentially in the order of closeness to the vehicle, and determines that a candidate intersection is present in the predetermined determination range in the case where a candidate intersection is specified.

The candidate intersection is an intersection to which roads that allow the vehicle to exit other than the along-the-way route are connected, within a predetermined range from which no attention location is present on at least one of the roads that allow the vehicle to exit, and the distance of which from a traffic jam as the attention location that is present on the along-the-way route is equal to or more than a predetermined distance. Thus, in order to determine whether or not the intersection is a candidate intersection, in step S110, through processing performed by the guide target intersection specifying section 21c, the control unit 20 specifies intersections on the along-the-way route ahead of the vehicle sequentially in the order of closeness to the vehicle, and determines the specified intersection as a determination target intersection. Then, the control unit 20 determines whether or not the determination target intersection is an intersection to which a road that allows the vehicle to exit other than the along-the-way route is connected. That is, the control unit 20 references the map information 30a, specifies the travelable direction of a road section connected to the determination target intersection, and determines that the determination target intersection is an intersection to which a road that allows the vehicle to exit other than the along-the-way route is connected if it is possible to exit from the determination target intersection to the road section.

For example, in the example illustrated in FIG. 4A, in the case where the intersection I₁ on the along-the-way route is the determination target intersection, it is possible to exit from the intersection I₁ to the road section R₅, and therefore it is determined that the intersection I₁ is an intersection to which a road that allows the vehicle to exit other than the along-the-way route is connected. In the example illustrated in FIG. 4A, in the case where the intersection I₂ on the along-the-way route is the determination target intersection, on the other hand, it is not possible to exit from the intersection I₂ to the road section R₈, and therefore it is not determined that the intersection I₂ is an intersection to which a road that allows the vehicle to exit other than the along-the-way route is connected.

In the case where roads that allow the vehicle to exit other than the along-the-way route are connected to the determination target intersection, through processing performed by the guide target intersection specifying section 21c, the control unit 20 determines whether or not the determination target intersection is an intersection, within a predetermined range from which no attention location is present on at least one of the roads that allow the vehicle to exit. Specifically, in the embodiment, the predetermined range is the range of one road section, and therefore through processing performed by the attention location acquisition section 21b, the control unit 20 references the RAM, and determines whether or not traffic information of the road section as the road that allows the vehicle to exit connected to the determination target intersection is stored in the RAM. In the case where traffic information regarding the road section is accumulated in the RAM, the control unit 20 specifies an attention location (the start location of a traffic jam or the start location of a traffic regulation) on the road that allows the vehicle to exit on the basis of the traffic information.

In addition, through processing performed by the attention location acquisition section 21b, the control unit 20 references the map information 30a for the road section as the road that allows the vehicle to exit connected to the determination target intersection, and determines whether or not a toll system changeover location is present in the road section. That is, in the case where a location at which the toll system is changed is present in the road section on the basis of the map information 30a, the control unit 20 acquires the location as a toll system changeover location. Examples of the location at which the toll system is changed include not only boundaries between a toll road and a free road but also locations at which the start point for deciding the toll for a toll road is changed. The control unit 20 determines whether or not the determination target intersection is an intersection, no attention location is present within a predetermined range from which on at least one road that allows the vehicle to exit, on the basis of the attention location acquired as described above.

For example, in the example illustrated in FIG. 4A, in the case where the intersection I₁ on the along-the-way route is the determination target intersection, none of the start location of a traffic jam, the start location of a traffic regulation, and a toll system changeover location is present in the road section R₅, and therefore it is determined that the intersection I₁ is an intersection, within a predetermined range from which no attention location is present on at least one road that allows the vehicle to exit. In the example illustrated in FIG. 4A, in the case where the intersection I₃ on the along-the-way route is the determination target intersection, on the other hand, a start location Pⱼ₆ of the traffic jam J is present in the road section R₆, and therefore it is not determined that the intersection I₃ is an intersection, within a predetermined range from which no attention location is present on at least one road that allows the vehicle to exit.

Further, through processing performed by the guide target intersection specifying section 21 c, the control unit 20 determines whether or not the distance between the traffic jam as the attention location that is present on the along-the-way route and the determination target intersection is equal to or more than a predetermined distance. That is, the control unit 20 determines whether or not the traffic information acquired in step S105 indicates that the start location of the traffic jam is present on the along-the-way route. In the case where it is determined that the traffic information indicates that the start location of the traffic jam is present on the along-the-way route, the control unit 20 references the map information 30a, and acquires the distance between the start location of the traffic jam and the determination target intersection. Then, the control unit 20 acquires an intersection, the distance of which is equal to or more than a predetermined distance, as a candidate intersection.

For example, in the example illustrated in FIG. 4A, it is assumed that the start location Pⱼ₄ of the traffic jam J and the intersection I₄ on the along-the-way route is equal to or less than the predetermined distance, and that the start location Pⱼ₄ of the traffic jam J and the intersection I₁ on the along-the-way route is more than the predetermined distance. In the example, the intersection I₁ is acquired as a candidate intersection in the case where the intersection I₁ on the along-the-way route is the determination target intersection, and the intersection I₄ is not acquired as a candidate intersection in the case where the intersection I₄ on the along-the-way route is the determination target intersection. As a result, in the example illustrated in FIG. 4, the intersection I₁ is acquired as a candidate intersection, but the intersections I₂, I₃, and I₄ are not acquired as a candidate intersection.

When the process for searching for a candidate intersection that is present ahead of the vehicle is performed as described above, through processing performed by the guide target intersection specifying section 21c, the control unit 20 determines whether or not a candidate intersection is present within a predetermined determination range (step S115). In the case where it is not determined in step S 115 that a candidate intersection is present in a predetermined determination range from the current location of the vehicle, through processing performed by the guide target intersection specifying section 21c, the control unit 20 determines whether or not a search has been made to the terminal end of the along-the-way route (step S120). In the case where a search has been made to the terminal end of the along-the-way route, the guide target intersection acquisition process is ended. In the case where it is not determined in step S120 that a search has been made to the terminal end of the along-the-way route, on the other hand, the control unit 20 repeats the processes in and after step S110. That is, the control unit 20 repeats steps S110, S115, and S120 until a candidate intersection that is present within a predetermined determination range on the along-the-way route is specified (or until a search has been made to the terminal end of the along-the-way route). Thus, in the case where a candidate intersection is present at any position on the along-the-way route, the candidate intersection is specified at any timing along with movement of the vehicle, and in the case where a candidate intersection is not present at any position on the along-the-way route, the guide target intersection acquisition process is ended without specifying a candidate intersection.

In the case where it is determined in step S115 that a candidate intersection is present within a predetermined determination range, on the other hand, through processing performed by the guide target intersection specifying section 21c, the control unit 20 tentatively sets the candidate intersection as the guide target intersection (step S125). That is, the control unit 20 correlates the candidate intersection found in step S110 with information indicating that the candidate intersection is the guide target intersection. In this stage, the guide target intersection may be subject to change, and therefore this state is called "tentative setting".

Next, through processing performed by the attention location acquisition section 21b and the guide target intersection specifying section 21c, the control unit 20 searches for a candidate intersection or an attention location that is present ahead of the tentatively set guide target intersection (step S130), and determines whether or not a candidate intersection or an attention location is present in a predetermined determination range (e.g. 15 km) (step S135). That is, the control unit 20 performs a process for specifying a candidate intersection or an attention location located ahead of the tentatively set guide target intersection and that is the closest to the guide target intersection in a predetermined determination range ahead of the tentatively set guide target intersection. The process for specifying a candidate intersection is similar to the process in step S110 except that the start point of the search is not the current location of the vehicle but the tentatively set guide target intersection. The process for specifying an attention location is executed by referencing the traffic information acquired in step S105 and specifying an attention location on the basis of the traffic information.

For example, in the example illustrated in FIG. 4A, when step S125 is executed with the intersection I₁ located ahead of the current location of the vehicle tentatively set as the guide target intersection, the control unit 20 performs a process for determining whether or not an attention location is present ahead of the intersection I₁ concurrently with a process for determining whether or not the determination target intersection is a candidate intersection with the intersections I₂, I₃, and I₄ sequentially determined as the determination target intersection. In the example, none of the intersections I₂, I₃, and I₄ is a candidate intersection, and the start location Pⱼ₄ of a traffic jam that is an attention location is present in the road section R₄. Therefore, if the start location Pⱼ₄ of a traffic jam is present within a predetermined determination range from the current location of the vehicle, it is determined in step S135 that an attention location is present in a predetermined determination range.

In the case where it is not determined in step S135 that a candidate intersection or an attention location is present in a predetermined determination range, through processing performed by the guide target intersection specifying section 21c, the control unit 20 determines whether or not a search has been made to the terminal end of the along-the-way route (step S140). In the case where a search has been made to the terminal end of the along-the-way route, the guide target intersection acquisition process is ended. In the case where it is not determined in step S140 that a search has been made to the terminal end of the along-the-way route, on the other hand, the control unit 20 repeats the processes in and after step S110. That is, in the case where it is not determined that an attention location is present, the control unit 20 performs the processes in and after step S110 again to newly search for a candidate intersection located ahead of the vehicle.

In the case where it is determined in step S135 that a candidate intersection or an attention location is present in a predetermined determination range, on the other hand, through processing performed by the guide target intersection specifying section 21c, the control unit 20 determines whether or not an attention location has been specified (step S145). That is, the control unit 20 determines that an attention location has been specified in the case where the location specified in the search in step S130 is an attention location, and does not determine that an attention location has been specified in the case where the location specified in the search in step S130 is a candidate intersection.

In the case where it is not determined in step S 145 that an attention location has been specified, through processing performed by the guide target intersection specifying section 21c, the control unit 20 newly tentatively sets the candidate intersection specified in step S130 as the guide target intersection (step S155), and repeats the processes in and after step S130. In the case where it is determined in step S145 that an attention location has been specified, on the other hand, through processing performed by the guide target intersection specifying section 21c, the control unit 20 sets the attention location as a guide target attention location, and determines the tentatively set guide target intersection as the guide target intersection (step S150). That is, the control unit 20 stores, in a storage medium (not illustrated), information indicating that the attention location specified in step S130 is the guide target attention location and information indicating that the tentatively set guide target intersection is determined as the guide target intersection. When step S150 is executed, the control unit 20 repeats the processes in and after step S110.

In the process described above, the control unit 20 repeats steps S130 to S155 until the guide target attention location is set on the along-the-way route. Thus, the process for searching for a candidate intersection located ahead is repeated until the guide target attention location is specified. As a result, the candidate intersection that is the closest to the guide target attention location, among candidate intersections that are present on the along-the-way route and that are positioned between the guide target attention location and the vehicle, is specified as the guide target intersection. For example, in the case where the guide target intersection acquisition process is executed at the current location P₀ of the vehicle indicated in FIG. 4A, a search is made ahead of the current location of the vehicle, and it is determined whether or not the intersections I₁, I₂, I₃, and I₄ are candidate intersections before the start location Pⱼ₄ of the traffic jam J as an attention location is specified. In the example, the intersection I₁ is the only candidate intersection, and therefore the start location Pⱼ₄ of the traffic jam J is set as the guide target attention location, and the intersection I₁ which is the candidate intersection that is the closest to the start location Pⱼ₄ is acquired as the guide target intersection.

### (3) Intersection Guide Process

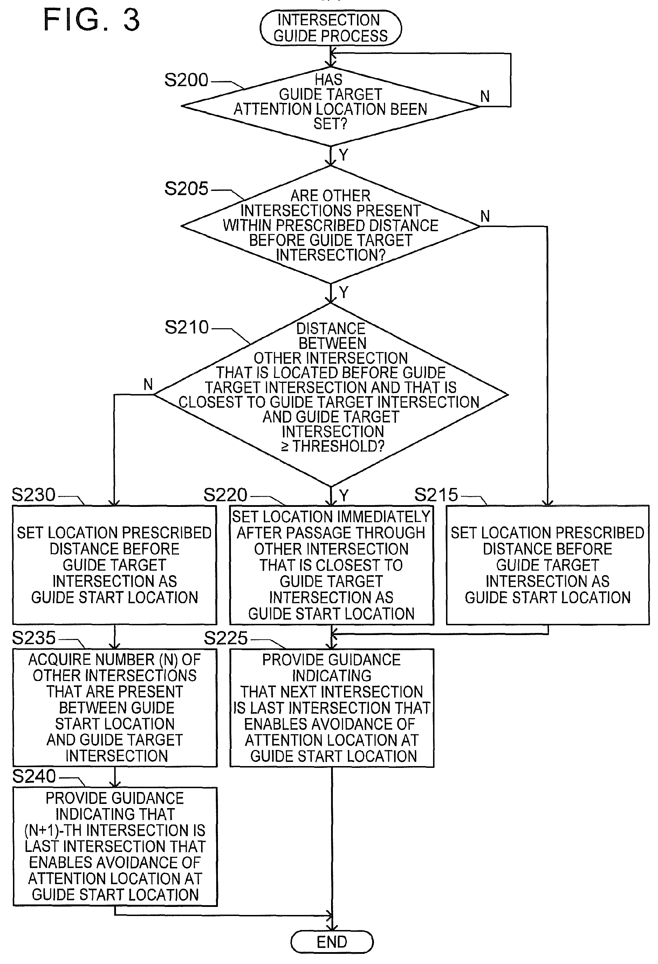

Next, an intersection guide process will be described in detail. FIG. 3 is a flowchart of the intersection guide process. The intersection guide process will be described in accordance with the actual examples illustrated in FIGS. 4B and 4C. In FIGS. 4B and 4C, solid arrows indicate road sections, and indicate that the vehicle can travel in the direction of the arrow. In addition, road sections are indicated by a symbol R, intersections are indicated by a symbol I, and various positions are indicated by a symbol P, with an alphabet or a numeral added to each symbol to distinguish the individual road sections etc. FIG. 4B illustrates an example in which a current location F_{0b} of the vehicle is present in a road section R_{1b} and an intersection I_{2b} is the guide target intersection. FIG. 4C illustrates an example in which a current location P_{0c} of the vehicle is present in a road section R_{1c} and an intersection I_{3c} is the guide target intersection.

Through processing performed by the intersection guide section 21e, the control unit 20 executes the intersection guide process in the case where guidance on the scheduled travel route is not provided. In the intersection guide process, the control unit 20 first determines whether or not a guide target attention location has been set (step S200). That is, the control unit 20 determines whether or not a guide target attention location has been set in step S150 of the guide target intersection acquisition process. In the case where it is not determined in step S200 that a guide target attention location has been set, the control unit 20 repeats the determination in step S200.

In the case where it is determined in step S200 that a guide target attention location has been set, on the other hand, the control unit 20 determines whether or not other intersections are present within a prescribed distance before the guide target intersection (step S205). In the case where it is not determined that other intersections are present within the prescribed distance before the guide target intersection, a location the prescribed distance before the guide target intersection is set as the guide start location (step S215). That is, in the embodiment, the prescribed distance is defined such that the location the prescribed distance before the guide target intersection is the normal guide start location. In the case where other intersections are not present within the prescribed distance before the guide target intersection, there is no other intersection that may be misidentified as the guide target intersection, and therefore a location within the prescribed distance from the guide target intersection is set as the guide start location.

In the case where it is determined in step S205 that other intersections are present within the prescribed distance from the guide target intersection, the control unit 20 determines whether or not the distance between another intersection that is located before the guide target intersection and that is the closest to the guide target intersection and the guide target intersection is equal to or more than a threshold (step S210). The distance corresponding to the threshold is set in advance to such a distance that secures a period for the driver to perform an operation at the guide target intersection after guidance on the guide target intersection is provided, and the threshold is set to be smaller than the prescribed distance. That is, a location the threshold before the guide target intersection is closer to the guide target intersection than the location the prescribed distance before the guide target intersection. However, if guidance is provided at the location the threshold before the guide target intersection, the driver can determine the road that should be traveled on in accordance with the guidance on the guide target intersection.

Thus, in the case where it is determined in step S210 that the distance between another intersection that is located before the guide target intersection and that is the closest to the guide target intersection and the guide target intersection is equal to or more than the threshold, the control unit 20 sets a location immediately after the passage through the other intersection that is the closest to the guide target intersection to the guide start location (step S220). When the guide start location is set in step S215 or S220, the control unit 220 provides guidance indicating that the next intersection is the last intersection that enables avoidance of the attention location at the guide start location (step S225). That is, the control unit 20 specifies the current location of the vehicle on the basis of output signals from the GPS receiver 41, the vehicle speed sensor 42, and the gyro sensor 43, and outputs to the user I/F unit 45 a control signal for providing guidance indicating that the next intersection is the last intersection that enables avoidance of the attention location through an image and a voice when the current location of the vehicle matches the guide start location. As a result, guidance indicating that the next intersection is the last intersection that enables avoidance of the attention location is provided through an image and a voice.

For example, in the example illustrated in FIG. 4B, in the case where the prescribed distance is L₁ and the distance corresponding to the threshold is L₂, it is difficult to distinguish the guide target intersection I_{2b} and an intersection I_{1b} if guidance on the guide target intersection is provided at a location P_{1b} the prescribed distance L₁ before the guide target intersection I_{2b}. In the case where guidance on the guide target intersection is provided at a location the distance L₂ corresponding to the threshold before the guide target intersection I_{2b} (immediately after the passage through the intersection I_{1b}), however, another intersection is not present between the vehicle and the guide target intersection, and a sufficient period for the driver to decide a drive operation at the guide target intersection is secured. Thus, it is possible to prevent the other intersection from being misidentified as the guide target intersection by the control unit 20 providing guidance on the guide target intersection in step S225 immediately after the passage through the intersection I_{1b}.

In the case where it is determined in step S210 that the distance between another intersection that is located before the guide target intersection and that is the closest to the guide target intersection and the guide target intersection is not equal to or more than the threshold, on the other hand, the control unit 20 sets the location the prescribed distance before the guide target intersection as the guide start location (step S230). In this case, other intersections are present between the guide start location and the guide target intersection, and therefore guidance indicating that the next intersection is the guide target intersection cannot be provided. For example, in the example illustrated in FIG. 4C, in the case where the prescribed distance is L₁ and the distance corresponding to the threshold is L₂, a location P_{1c} the prescribed distance L₁ before the guide target intersection I_{3c} is the guide start location. In the example, other intersections I_{1c} and I_{2c} are present between the guide start location P_{1c} and the guide target intersection I_{3c}, and therefore guidance indicating that the next intersection is the guide target intersection cannot be provided at the guide start location P_{1c}.

Thus, in this case, the control unit 20 provides guidance on the number of intersections positioned between the guide target intersection and the vehicle. Specifically, the control unit 20 acquires the number (N) of other intersections that are present between the guide start location and the guide target intersection (step S235). That is, the control unit 20 references the map information 30a, and counts the number of intersections between the guide start location and the guide target intersection. For example, in the example illustrated in FIG. 4C, other intersections I_{1c} and I_{2c} are present between the guide start location P_{1c} and the guide target intersection I_{3c}, and therefore the number N of the other intersections is two.

Next, the control unit 20 provides guidance indicating that the (N+1)-th intersection is the last intersection that enables avoidance of the attention location at the guide start location (step S240). That is, the control unit 20 specifies the current location of the vehicle on the basis of output signals from the GPS receiver 41, the vehicle speed sensor 42, and the gyro sensor 43, and outputs to the user I/F unit 45 a control signal for providing guidance indicating that the (N+1)-th intersection is the last intersection that enables avoidance of the attention location when the current location of the vehicle matches the guide start location. As a result, guidance indicating that the (N+1)-th intersection is the last intersection that enables avoidance of the attention location is provided through an image and a voice.

For example, in the example illustrated in FIG. 4C, in the case where the prescribed distance is L₁ and the distance corresponding to the threshold is L₂, guidance indicating that the third intersection is the last intersection that enables avoidance of the attention location is provided through an image and a voice when the current location of the vehicle matches the guide start location P_{1c}. Thus, the driver can reliably specify the guide target intersection by driving while counting the number of intersections.

### (4) Other Embodiments

The embodiment described above is an example for carrying out the present invention, and a variety of other embodiments can be adopted as long as guidance indicating that an intersection to which a road that can be traveled on without reaching an attention location is connected is the guide target intersection is provided. For example, the navigation system 10 may be fixedly mounted on the vehicle, or may be a portable navigation system 10 that can be brought into the vehicle to be utilized.

Further, the along-the-way route acquisition means may be able to acquire an along-the-way route to be followed in the case where the vehicle travels along the way. The along-the-way route may be a route to be followed in the case where the vehicle travels along the road on which the vehicle is present, and continuous road sections that match the definition of "along-the-way" prescribed in advance may be acquired as the along-the-way route. For example, "along-the-way" is defined by continuous road sections that are most similar to straight lines, continuous road sections with the same road number, continuous road sections with the same attribute, or the like. The attribute can be prescribed on the basis of a variety of elements such as the road type (a general road, a highway, etc.).

The attention location acquisition means may be able to acquire an attention location that requires a determination as to whether or not to travel. For example, the attention location acquisition means may be configured to determine whether or not an attention location is present on a determination target road, and to determine the position of the attention location in the case where an attention location is present. The attention location may be a location that requires a determination as to whether or not to travel, and may be a location that the driver should determine in advance whether or not to travel through, a location with a factor etc. that hinders travel, or the like. For example, in the case where any of the start location of a traffic jam, the start location of a passage regulation, and a toll system changeover location is present on the along-the-way route, such a location may be considered as an attention location. As a matter of course, only one of the start location of a traffic jam, the start location of a passage regulation, and a toll system changeover location may be focused on so that it is considered that an attention location is present in the case where a location that is focused on is present on the determination target road, or two or more of the start location of a traffic jam, the start location of a passage regulation, and a toll system changeover location may be focused on so that it is considered that an attention location is present in the case where any of the locations that are focused on is present on the determination target road.

The guide target intersection specifying means may be able to specify, as a guide target intersection, an intersection which is positioned between the attention location that is present on the along-the-way route and the vehicle and to which a road that can be traveled on without reaching the attention location other than the attention location that is present on the along-the-way route is connected. For example, it may be determined whether or not an attention location is present on a road other than the along-the-way route connected to the intersection for each of the intersections positioned between the attention location that is present on the along-the-way route and the vehicle, and in the case where at least one road other than the along-the-way route on which no attention location is present is connected to the intersection, the intersection may be determined as the guide target intersection.

In determining whether or not a road can be traveled on without reaching an attention location other than the attention location that is present on the along-the-way route, it may be determined whether or not an attention location is inevitably reached by traveling on the road, and it may be determined whether or not an attention location is reached within a predetermined range from an intersection. That is, it is only necessary that the possibility that the driver of the vehicle reaches an attention location should be suppressed by acquiring the guide target intersection and providing guidance on the guide target intersection in accordance with the determination and the driver performing an operation for avoiding an attention location in accordance with the guidance.

The intersection guide means may be able to provide guidance on the guide target intersection, and may be able to allow the driver of the vehicle to recognize the guide target intersection before the vehicle reaches the guide target intersection. A variety of modes of guidance may be provided. Guidance on the guide target intersection itself may be provided, or guidance indirectly indicating the guide target intersection, e.g. guidance on a road that can be traveled on without reaching an attention location, the exit direction for traveling on such a road, etc., may be provided.

Further, in a configuration including route guide means for acquiring a scheduled travel route for guiding the vehicle to a destination location to provide guidance on the scheduled travel route, the intersection guide means may be configured to provide guidance on the guide target intersection in the case where the route guide means does not provide guidance on the scheduled travel route. That is, in a configuration in which a search is made for a scheduled travel route in advance and the vehicle is guided along the scheduled travel route, in general, the scheduled travel route is prescribed so as not to reach an attention location. Thus, in the case where guidance on the scheduled travel route is provided, it is less necessary to provide guidance for avoiding an attention location. However, in the case where guidance on the scheduled travel route is not provided, normally, a route that avoids the attention location that is present on the along-the-way route is not specified. Therefore, if guidance on the guide target intersection is provided in this state, it is possible to provide guidance for avoiding an attention location.

In a specific configuration example for specifying the guide target intersection, further, intersections positioned between the attention location that is present on the along-the-way route and the vehicle may be acquired as candidates in the case where roads that allow the vehicle to exit other than the along-the-way route are connected to the intersection, no attention location is present within a predetermined range from the intersection on at least one of the roads that allow the vehicle to exit, and the intersection is at a predetermined distance or more from a traffic jam as the attention location that is present on the along-the-way route, and the intersection that is the closest to the attention location, among the candidates, may be specified as the guide target intersection. That is, in order to avoid an attention location, the vehicle should travel on a road other than the along-the-way route before reaching the attention location that is present on the along-the-way route. Thus, it is possible to check whether or not a road that allows avoidance of an attention location is connected to the intersection by determining whether or not an intersection to which a road that allows the vehicle to exit other than the along-the-way route is connected is present between the attention location that is present on the along-the-way route and the vehicle.

In addition, in order to avoid an attention location by exiting through a road that allows the vehicle to exit, it is necessary that an attention location should not be reached if the road that allows the vehicle to exit is traveled on. Thus, it is possible to determine whether or not an attention location is not reached from the intersection if the road that allows the vehicle to exit is traveled on by determining whether or not an attention location is present within a predetermined range from the intersection on at least one road that allows the vehicle to exit. A variety of configurations can be adopted, and the predetermined range may be prescribed by the distance, or may be prescribed by the road section (e.g. a single road section etc.).

Further, the range of a traffic jam is varied temporally, and therefore the range of a traffic jam may be increased when a long time elapses after a guide target intersection is specified, and the intersection specified as the guide target intersection may be included in the range of the traffic jam. Thus, the predetermined distance is defined as a distance over which the start location of the traffic jam, which is the attention location that is present on the along-the-way route, may be moved within a period before the vehicle reaches the guide target intersection. Then, by determining whether or not the distance from the traffic jam is equal to or more than the predetermined distance, the guide target intersection can be specified such that the intersection specified as the guide target intersection is not included in the range of the traffic jam with the range of the traffic jam increased after the guide target intersection is specified.

Thus, intersections that meet all the foregoing determination conditions can be specified as candidates for the guide target intersection. In the case where an attention location on a road that allows the vehicle to exit, not on the along-the-way route, is a traffic jam, the predetermined range in which a determination for the road that allows the vehicle to exit is performed may be defined such that the intersection specified as the guide target intersection is not included in the range of the traffic jam on the road that allows the vehicle to exit along with the lapse of time. For example, the predetermined range may be defined as a distance over which the start location of the traffic jam on the road that allows the vehicle to exit is moved within a period before the vehicle reaches the guide target intersection.

Further, in the case where a plurality of candidate intersections are present, a desired intersection may be determined as the guide target intersection. In a configuration example in which a specific intersection is determined as the guide target intersection, the intersection that is the closest to an attention location, among the candidates, may be specified as the guide target intersection. According to the configuration, guidance on an intersection for avoiding the attention location at a location that is as close as possible to the attention location as the guide target intersection can be provided. Thus, guidance on an intersection for avoiding the attention location at a location that is as close as possible to the destination location assumed by the driver of the vehicle can be provided. Therefore, in the case where the vehicle travels on a road exclusively for automobiles, for example, and the road exclusively for automobiles is the along-the-way route, an attention location is present ahead of the vehicle, and an interchange located before the attention location is the guide target intersection, guidance on the interchange which enables avoidance of the attention location at a location that is as close as possible to the destination location utilizing the road exclusively for automobiles can be provided.

Further, in a specific configuration example for specifying the guide target intersection, intersections positioned between the attention location that is present on the along-the-way route and the vehicle may be acquired as candidates in the case where roads that allow the vehicle to exit other than the along-the-way route are connected to the intersection and no attention location is present within a predetermined range from the intersection on at least one of the roads that allow the vehicle to exit, and the intersection that is the closest to the attention location, among the candidates, may be specified as the guide target intersection. That is, the guide target intersection may be specified without making a determination as to a traffic jam on the along-the-way route.

Further, in a configuration example for providing guidance on the guide target intersection, guidance on the guide target intersection may be provided after the vehicle passes through another intersection that is located before the guide target intersection and that is the closest to the guide target intersection in the case where the distance between the other intersection and the guide target intersection is equal to or more than the threshold. According to the configuration, it is possible to prevent the other intersection from being misidentified as the guide target intersection. The threshold may be set in advance so as to secure a period for the driver to perform an operation at the guide target intersection after guidance on the guide target intersection is provided.

Further, in the case where the distance between another intersection that is located before the guide target intersection and that is the closest to the guide target intersection and the guide target intersection is less than the threshold, guidance on the number of intersections positioned between the guide target intersection and the vehicle may be provided. That is, in the case where the distance between another intersection that is located before the guide target intersection and that is the closest to the guide target intersection and the guide target intersection is less than the threshold, it is considered that a period for the driver to perform an operation at the guide target intersection cannot be secured after guidance on the guide target intersection is provided if guidance on the guide target intersection is provided after the vehicle passes through the other intersection. In this case, guidance on the guide target intersection is provided with other intersections present between the vehicle and the guide target intersection. Therefore, guidance is provided so as to distinguish between the guide target intersection and the other intersections by providing guidance on the number of intersections positioned between the guide target intersection and the vehicle. In counting the number of intersections positioned between the guide target intersection and the vehicle, the guide target intersection may be included in the number, or the guide target intersection may be excluded from the number. That is, the manner of guidance on the number (such as the wording) should match the counting method.

Further, the technique of providing guidance on an intersection to which a road that can be traveled on without reaching an attention location other than the attention location that is present on the along-the-way route is connected as the guide target intersection as in the present invention can also be implemented as a program or a method. In addition, it can be assumed that the system, program, and method described above are implemented as a single device, implemented by a plurality of devices, or implemented utilizing parts that are common to various portions provided in the vehicle, and the system, program, and method include a variety of aspects. For example, a navigation system, method, and a program that include the device described above can be provided. Various changes may be made. For example, some units may be implemented using software, and the others may be implemented using hardware. Further, the present invention may be implemented as a storage medium for a program that controls the system. As a matter of course, the storage medium for the software may be a magnetic storage medium or a magneto-optical storage medium. Furthermore, any storage medium that may be developed in the future can also be considered to be exactly the same.

### Description of the Reference Numerals

- 10: NAVIGATION SYSTEM
- 20: CONTROL UNIT
- 21: DRIVE ASSIST PROGRAM
- 21a: ROUTE ACQUISITION SECTION
- 21b: ATTENTION LOCATION ACQUISITION SECTION
- 21c: GUIDE TARGET INTERSECTION SPECIFYING SECTION
- 21e: INTERSECTION GUIDE SECTION
- 30: STORAGE MEDIUM
- 30a: MAP INFORMATION
- 41: GPS RECEIVER
- 42: VEHICLE SPEED SENSOR
- 43: GYRO SENSOR
- 44: COMMUNICATION UNIT
- 45: USER I/F UNIT

## Claims

1. A drive assist system comprising:
route guide means for acquiring a scheduled travel route for guiding a vehicle to a destination location to provide guidance on the scheduled travel route;
along-the-way route acquisition means for acquiring an along-the-way route to be followed in the case where the vehicle travels along the way;
attention location acquisition means for acquiring an attention location that requires a determination as to whether or not to travel;
guide target intersection specifying means for specifying, as a guide target intersection, an intersection which is positioned between the attention location that is present on the along-the-way route and the vehicle and to which a road that can be traveled on without reaching the attention location other than the attention location that is present on the along-the-way route is connected; and
intersection guide means for providing guidance on the guide target intersection in the case where guidance on the scheduled travel route is not provided by the route guide means.

2. The drive assist system according to claim 1, wherein
the guide target intersection specifying means
acquires intersections positioned between the attention location that is present on the along-the-way route and the vehicle as candidates in the case where
a road that allows the vehicle to exit other than the along-the-way route is connected to the intersection,
no attention location is present within a predetermined range from the intersection on the road that allows the vehicle to exit, and
the intersections are at a predetermined distance or more from a traffic jam as the attention location that is present on the along-the-way route, and
specifies the intersection that is the closest to the attention location, among the candidates, as the guide target intersection.

3. The drive assist system according to claim 1 or 2, wherein
the guide target intersection specifying means
acquires intersections positioned between the attention location that is present on the along-the-way route and the vehicle as candidates in the case where
a road that allows the vehicle to exit other than the along-the-way route is connected to the intersection, and
no attention location is present within a predetermined range from the intersection on the road that allows the vehicle to exit, and
specifies the intersection that is the closest to the attention location, among the candidates, as the guide target intersection.

4. The drive assist system according to any one of claims 1 to 3, wherein
the intersection guide means
provides guidance on the guide target intersection after the vehicle passes through another intersection that is located before the guide target intersection and that is the closest to the guide target intersection in the case where a distance between the other intersection and the guide target intersection is equal to or more than a threshold, and
provides guidance on a number of intersections positioned between the guide target intersection and the vehicle in the case where the distance between the other intersection and the guide target intersection is not equal to or more than the threshold.

5. The drive assist system according to any one of claims 1 to 4, wherein
the attention location is any of a start location of a traffic jam, a start location of a passage regulation, and a toll system changeover location.

6. A drive assist method comprising:
a route guide step of acquiring a scheduled travel route for guiding a vehicle to a destination location to provide guidance on the scheduled travel route;
an along-the-way route acquisition step of acquiring an along-the-way route to be followed in the case where the vehicle travels along the way;
an attention location acquisition step of acquiring an attention location that requires a determination as to whether or not to travel;
a guide target intersection specifying step of specifying, as a guide target intersection, an intersection which is positioned between the attention location that is present on the along-the-way route and the vehicle and to which a road that can be traveled on without reaching the attention location other than the attention location that is present on the along-the-way route is connected; and
an intersection guide step of providing guidance on the guide target intersection in the case where guidance on the scheduled travel route is not provided by the route guide means.

7. A drive assist program that causes a computer to implement:
a route guide function of acquiring a scheduled travel route for guiding a vehicle to a destination location to provide guidance on the scheduled travel route;
an along-the-way route acquisition function of acquiring an along-the-way route to be followed in the case where the vehicle travels along the way;
an attention location acquisition function of acquiring an attention location that requires a determination as to whether or not to travel;
a guide target intersection specifying function of specifying, as a guide target intersection, an intersection which is positioned between the attention location that is present on the along-the-way route and the vehicle and to which a road that can be traveled on without reaching the attention location other than the attention location that is present on the along-the-way route is connected; and
an intersection guide function of providing guidance on the guide target intersection in the case where guidance on the scheduled travel route is not provided by the route guide means.
